(19) Europäisches Patentamt / European Patent Office / Office européen des brevets

(11) **EP 3 915 340 B1**

(12) **EUROPEAN PATENT SPECIFICATION**

(45) Date of publication and mention
of the grant of the patent:
**22.11.2023 Bulletin 2023/47**

(21) Application number: **20700737.8**

(22) Date of filing: **21.01.2020**

(51) International Patent Classification (IPC):
***H05B 45/355*** *(2020.01)*

(52) Cooperative Patent Classification (CPC):
**H05B 45/355; H05B 45/3725; H05B 45/59;**
Y02B 20/30

(86) International application number:
**PCT/EP2020/051344**

(87) International publication number:
**WO 2020/152130 (30.07.2020 Gazette 2020/31)**

(54) **LIGHTING DRIVER AND DRIVE METHOD**

BELEUCHTUNGSTREIBER UND ANSTEUERUNGSVERFAHREN

CIRCUIT DE COMMANDE D'ÉCLAIRAGE ET PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.01.2019 PCT/CN2019/073205
29.04.2019 EP 19171609**

(43) Date of publication of application:
**01.12.2021 Bulletin 2021/48**

(73) Proprietor: **Signify Holding B.V.**
**5656 AE Eindhoven (NL)**

(72) Inventors:
• **JIN, Gaoxian**
**5656 AE Eindhoven (NL)**

• **DE HEER GALISTEO, Raimundo**
**5656 AE Eindhoven (NL)**
• **LU, Han**
**5656 AE Eindhoven (NL)**

(74) Representative: **Verweij, Petronella Daniëlle**
**Signify Netherlands B.V.**
**Intellectual Property**
**High Tech Campus 7**
**5656 AE Eindhoven (NL)**

(56) References cited:
**WO-A2-2013/039366      WO-A2-2016/008943
US-B2- 7 911 149**

**Description**

FIELD OF THE INVENTION

This invention relates to lighting drivers, and in particular to LED lighting drivers and methods.

BACKGROUND OF THE INVENTION

Solid state lighting units, and in particular LED-based (retrofit) lamps, are used more and more in home buildings and offices. Besides their high efficiency they also attract consumers due to new design features, different color temperatures, dimming ability etc.

To fit LED lighting to existing mains lighting fixtures, each LED light unit makes use of a converter circuit, for converting the AC mains into a DC drive signal, and also for reducing the voltage level.

The converter circuit typically comprises a rectifier and a switched mode power converter.

There are various possible designs of switched mode power converter. A low cost switched mode power converter is a single stage converter, such as a buck converter or a buck-boost converter. In both cases, there is a main inductor which controls the storage of energy from the input and the delivery of stored energy to the load. A main power switch controls the supply of energy from the input to the main inductor. The timing of operation of the main power switch, in particular the duty cycle, controls the energy transfer.

The timing may be controlled by a feedback control signal, in particular a signal which represents the current through the LED load. For this purpose, many converters have current sensing by means of a current sense resistor, which is placed in the path of the current to be sensed.

The current through the current sense resistor generates a voltage, and once the voltage has reached a desired value, the main power switch will be switched off. This is a peak current control mode. The time during which the main power switch is on is the time until the peak current is reached. This type of current mode control switching is dependent on the DC bus voltage in that the higher the bus voltage, the quicker it will reach the peak current. Alternatively, the current sense resistor may be used to sense the average current to the load, and a duty cycle of the main power switch is controlled according to the average current. This is an average current control mode. These modes are well known in this field.

It is common for a single lamp or for dual lamps to be connected series with an electromagnetic, EM, ballast input. Thus, it is required that LED-based retrofit lamps can be connected as individual lamps or as a series connection of two lamps, and with only a single lamp design, so that costs can be kept low and a lower inventory of product designs is possible.

The key performance requirement for LED replacement lamps is that the power factor exceeds 0.7 (especially for single lamp connection) and that the modulation depth, or ripple current, is below 10%.

A conventional low power factor circuit is not able to meet the requirement for a power factor of greater than 0.7, whereas a high power factor circuit is typically not able to meet the requirement for a modulation depth below 10%. A valley fill circuit is known for improving the power factor, but such a circuit may not be suitable for dual lamps in series because the valley voltage is too low, which can result in flicker of a lighting load.

US7911149B2 discloses a lamp with a valley fill circuit.

WO 2013/039366 discloses a lamp having a valley fill circuit that can be selectively enabled or disabled according to whether the input is from an electronic ballast or otherwise.

SUMMARY OF THE INVENTION

It is a concept of the invention to provide a lighting driver having a valley fill circuit for increasing the power factor, and to enable or disable the valley fill function in dependence on whether there is a single lighting load driven by an external power source or two lighting loads in series. In this way, a desired power factor and current modulation depth can be achieved for individual lamps or dual in-series lamps. It is a further concept of the invention to disable the valley fill circuit in dual in-series installation, since the input voltage to the lamps are relatively low when in the dual mode as two lamps divide the mains voltage, and involving the valley fill circuit may further decrease the voltage and makes the driver not operate normally. So it is proposed to disable the valley fill circuit in the dual mode.

The invention is defined by the claims.

According to examples in accordance with an aspect of the invention, there is provided a driver for driving a lighting load, comprising:

a switch mode power converter adapted to receive an input voltage from an external power source at a power input and to provide energy to the lighting load at a power output;
a detect arrangement, adapted to detect if the driver is in a single mode and connected across the external power source alone or is in a dual mode and connected across the external power source in series with another driver;
a valley fill circuit connected between the power input and the switch mode power converter; and
a control input adapted to enable the valley fill circuit for the single mode and to disable the valley fill circuit for the dual mode as detected by the detect arrangement.

In this driver, a switchable valley circuit is used to improve the power factor when needed. Thus, a low power factor circuit may otherwise be used, hence providing a low cost and simple driver architecture. The valley fill circuit is enabled or disabled depending on whether a single mode is detected (so that all of the voltage of the external power is present across the driver) or a dual mode is detected (so that half of the voltage of the external power is present across the driver). In this way, the desired power factor and modulation depth can be achieved by the driver for both modes, and with automatic detection of which mode is present.

The enabling or disabling of the valley fill circuit is for example achieved by operating a shorting switch.

The control input is preferably adapted to enable the valley fill circuit for the single mode and disable the valley fill circuit for the dual mode, and the detect arrangement comprises a voltage sensing arrangement to sense the input voltage thereby to detect if the driver is in the single mode or in the dual mode. Normally, the input voltage is relatively high when in single mode, and relatively low when in the dual mode as two lamps divide the mains voltage.

In this way, the valley fill circuit is used to obtain the desired power factor for the higher voltage single mode, whereas a low power factor circuit is able to achieve the desired current modulation when in the dual mode and avoid issues arising from the use of a valley fill circuit at low input voltages. The detection is based on the input voltage, since this depends on whether the external power is across a single lighting load or two of the lighting loads in series. Since the valley fill is turned off for the dual mode, the bus voltage to each lamp and the output voltage is high enough to meet the required load voltage (e.g. LED forward voltage).

Preferably, when the valley fill circuit is enabled for the single mode, the switch mode power converter is adapted to operate with peak output current feedback control.

In this way, the output current is regulated by feedback control. The use of the valley fill circuit means that a low cost low power factor controller is suitable. The input voltage is high (because it is not shared) so that even with the valley fill function, the output voltage is sufficient for the load, such as LED lighting.

Preferably, when the valley fill circuit is disabled for the dual mode, the switch mode power converter is adapted to operate in an open loop control mode.

In this way, the output current is controlled in open loop in dependence on the input voltage so that balancing between the two lamps is made possible.

The driver for example comprises a controller and a current sensing arrangement to sense the current flowing through a main switch of the switch mode power converter and feed back to the controller. The detect arrangement may then comprise a first switching arrangement for configuring the current sensing arrangement thereby to enable the controller to configure the switched mode power converter in the closed loop mode or in the open loop mode.

By adapting the current sense arrangement, the behavior of the controller can be adapted. This provides a simple way to configure a single design of controller to the two different modes of operation, without changing the internal structure of the controller. Alternatively, a logic circuit and an IC with a dedicated control pin for closed loop control and for open loop control can be used.

For a single lamp connection, the input voltage is high. The closed loop control is used to provide a peak current control mode, with a valley fill function. For a dual lamp connection, the input voltage is low. The open loop control is used, during which the controller is aiming to deliver more current. The output current becomes proportional to the input voltage so the balancing of the dual lamps is achieved.

The first switching arrangement is for example adapted to increase a resistance of the current sensing arrangement to achieve the closed loop mode and decrease the resistance of the current sensing arrangement so as to saturate the controller thereby to achieve the open loop mode.

The valley fill circuit for example comprises:
a first capacitor and a second capacitor, wherein the first and second capacitors are:

for connection in series to be charged by an input voltage exceeding a first threshold; and
for connection in parallel to discharge to the switched mode power supply when the input voltage is below a second threshold.

This defines the valley fill function which takes place when the valley fill function is enabled.

The valley fill circuit may further comprise a second switching arrangement for bypassing the second capacitor in the dual mode and not bypassing the second capacitor in the single mode.

This defines the way the overall valley fill circuit function is disabled when the dual mode is detected. The bypassing effectively disables the valley fill circuit.

The capacitance of the first and the second capacitors are for example each in the range $1\,\mu F$ to $100\,\mu F$. This enables the desired valley fill function to be achieved.

The second switching arrangement for example comprises a transistor. This provides a simple and low cost way to implement a disable function of the valley fill circuit.

Preferably, the control terminal of the second switching arrangement and the control terminal of the first switching arrangement are connected together. Thus the valley fill circuit and the closed loop / open loop can be controlled by a single control signal, thereby in a synchronized manner.

The valley fill circuit may comprise:

the first capacitor between the power input and a first node, wherein the switching arrangement is between the first node and a reference;

a first diode and a first resistor in series and in forward bias direction from the first node to a second node; the second capacitor between the second node and the reference; and a second diode in the forward bias direction from the second node to the power input.

This defines one basic design of valley fill circuit, which in itself is well known, and to which a switching arrangement may be applied to give the enabling and disabling function. Other valley fill circuit designs may of course be used by providing an enable or disable function. The resistance of the first resistor is for example in the range 100Ω to 1kΩ.

The driver may further comprise a smoothing capacitor for connection in parallel with the lighting load, wherein the smoothing capacitor has a capacitance of more than 1μF. Thus, it operates in low power factor mode when the valley fill circuit is not needed.

The switch mode power converter for example comprises a buck converter.

The invention also provides a lighting circuit, comprising:

a driver as defined above; and
a lighting load connected to the power output of the driver.

The invention also provides a driving method for driving a lighting load using a driver, the method comprising:

receiving by a switch mode power converter of the driver an input voltage from an external power source at a power input and providing energy to the lighting load at a power output;
detecting by a detect arrangement of the driver if the driver is in a single mode and connected across the external power source alone or is in a dual mode and connected across the external power source in series with another driver; and
enabling or disabling a valley fill circuit connected between the power input and the switch mode power converter in dependence on whether the driver is in the single mode or the dual mode, as detected by the detect arrangement.

These and other aspects of the invention will be apparent from and elucidated with reference to the embodiment(s) described hereinafter.

BRIEF DESCRIPTION OF THE DRAWINGS

Examples of the invention will now be described in detail with reference to the accompanying drawings, in which:

Fig. 1 shows an example of buck converter circuit, wherein the size of a smoothing capacitor determines if the circuit is a high power factor or low power factor circuit;
Fig. 2 shows an alternative buck converter circuit;
Fig. 3 shows two buck converters each of the type shown in Fig. 1 connected in series across the system voltage V1;
Fig. 4 shows a valley fill circuit;
Fig. 5 shows a switchable valley fill circuit;
Fig. 6 shows voltage waveforms for a low power factor circuit, high power factor circuit and valley fill circuit, for a single lamp mode;
Fig. 7 shows current waveforms for a low power factor, high power factor and valley fill circuit;
Fig. 8 shows voltage waveforms for a low power factor circuit, high power factor circuit and valley fill circuit, for a dual lamp mode;
Fig. 9 shows a first example of a driver circuit in accordance with the invention;
Fig. 10 shows a second example of a driver circuit in accordance with the invention;
Fig. 11 shows a third example of a driver circuit in accordance with the
Fig. 12 shows a fourth example of a driver circuit in accordance with the invention; and
Fig. 13 shows a possible current versus voltage characteristic.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a lighting driver that has a switch mode power converter, and a detect arrangement for detecting if the driver is in a single mode and connected across the external power source alone or is in a dual mode and connected across the external power source in series with another driver. A valley fill circuit is provided between the power input and the switch mode power converter. It is enabled or disabled in dependence on whether the driver is in the single mode or the dual mode. The switch mode power converter is for example a buck converter.

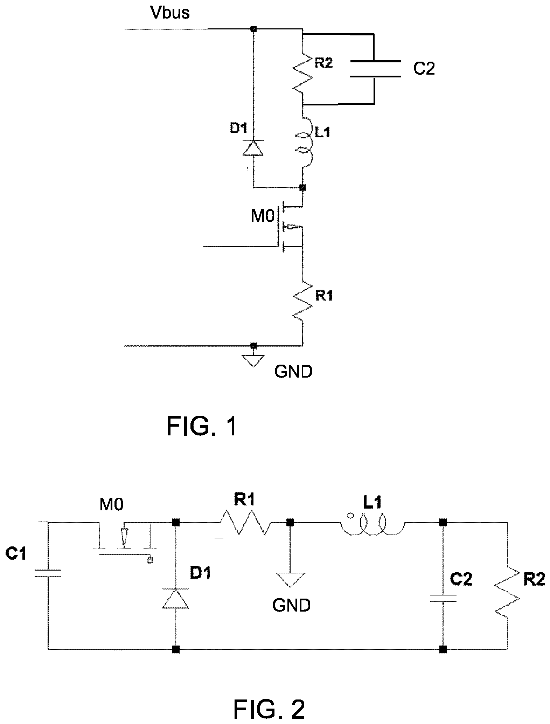

Figure 1 shows an example of a buck converter circuit. A DC bus Vbus supplies a load (represented simply as a resistor R2, but which could be a linear or nonlinear load), an inductor L1, a main power switch M0 and a current sense resistor R1 which are all in series. A flyback diode D1 is connected across the load and inductor. A smoothing capacitor C2 is in parallel with the load. The current sensing takes place at the bottom side of the main power switch in this example.

The size of the smoothing capacitor C2 determines the power factor of the circuit. A smaller capacitor gives rise to a larger power factor. For example a low power factor circuit may use a smoothing capacitor of 4.7μF and a high power factor circuit may use a smoothing capacitor of 0.1μF.

The duty cycle of the main power switch M0 is controlled to adjust the power transfer ratio of the circuit from the input to the inductor and from the inductor to the load. This power transfer is for example controlled in dependence on the sensed current.

Figure 2 shows an alternative buck converter circuit with high side switching and sensing. The DC bus supplies the main power switch M0, the current sense resistor R1, the inductor L1, and the load R2 which are all in series. A flyback diode D1 is connected across the load, inductor and sense resistor, and there is again a smoothing capacitor C2 in parallel with the load R2. In this case, capacitor C1 determines the power factor and C2 determines the load ripple current.

In these circuits, each time the main switch M0 is switched on, the current through the current sense resistor R1 is sensed. The current through the current sense resistor R1 generates a voltage across the resistor R1 and once the voltage across R1 has reached a desired value, the main switch M0 will be switched off. This is known as a peak current mode control switching and is used in the most basic buck converters. The switching frequency is dependent on the DC bus voltage.

As long the output load R2 of the buck converter does not change, there is a closed loop control of the system, where the switch on time of the main switch M0 is controlled by the sensed current independent of the DC bus voltage.

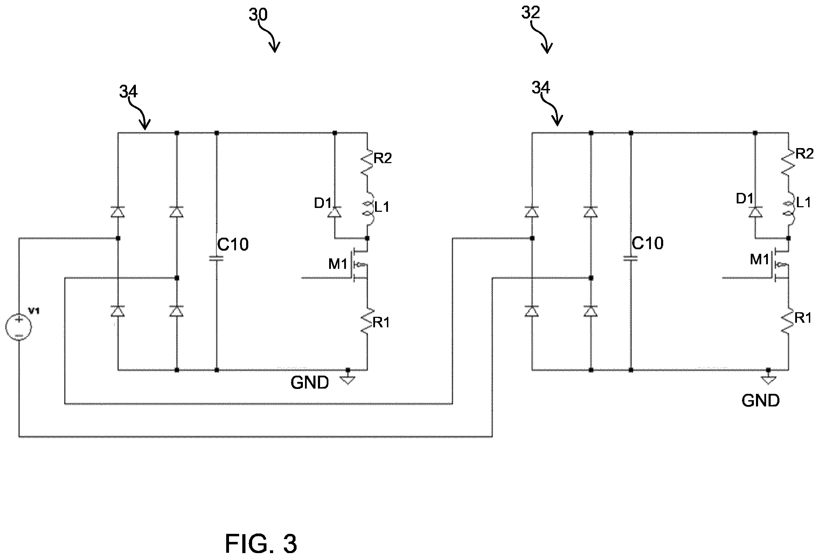

Figure 3 shows two buck converters 30, 32 each of the type shown in Figure 1 connected in series across the system voltage V1. Each converter additionally has a diode bridge rectifier 34 and an input capacitor C10.

In the series configuration, the input voltage of each buck converter should be at the same level to prevent imbalance and instability. However, if the buck converter works in the above-mentioned feedback mode, it is hard to ensure the input voltages are equal.

There is a need for a lamp that can be placed either alone, or in series combination with another lamp. If a lamp operating with closed loop control is operating in a series connection, the voltage may develop unevenly. WO2016/008943 discloses a lamp that can be in closed loop mode for a single installation and in open loop mode for a dual lamp installation.

Furthermore, there is a need to meet power factor requirements as well as current ripple requirements in both of these possible connection configurations. The key performance requirement for LED replacement is a power factor greater than 0.7 and modulation depth (or ripple current) below 10%. Traditional low power factor circuits do not meet the need for a high power factor of above 0.7, whereas traditional high power factor circuit do not meet the need for a modulation depth below 10%.

One known circuit for improving the power factor of a low power factor circuit is a valley fill circuit.

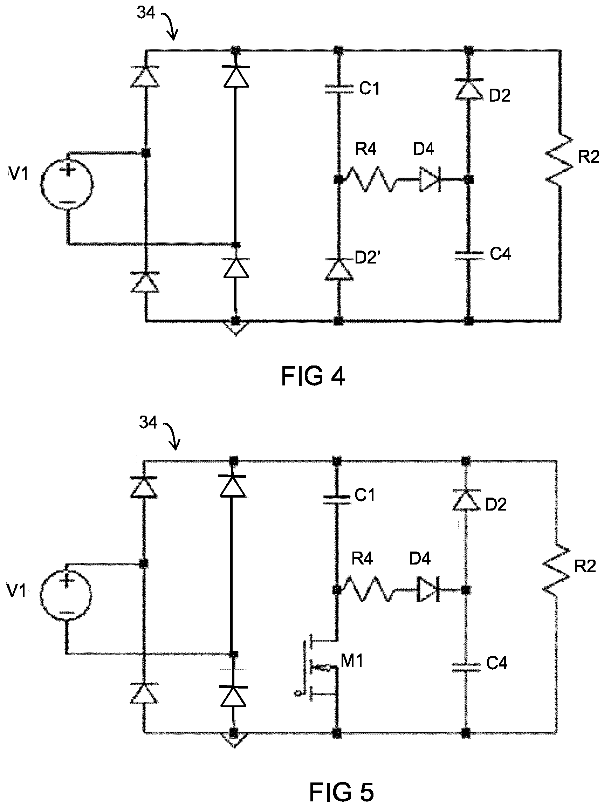

Figure 4 shows a basic valley fill circuit connected between a rectifier 34 (which delivers a rectified mains signal) and the load R2.

The valley fill circuit comprises a first capacitor C1 and a second capacitor C4 in series between the rectified mains signal terminals. Between the two capacitors, in the series connection, is a diode D4 and resistor R4.

The second capacitor C4 is in series with a diode D2 between the rectified mains signal terminals (with the diode D2 in the forward direction towards the positive rectified mains terminal and connecting to the positive terminal). Similarly, the first capacitor C1 is in series with a diode D2' between the rectified mains signal terminals (with the diode D2' in the forward direction towards the positive rectified mains terminal but connecting to the negative terminal). Thus, there are two parallel branches each of a capacitor and diode. The branches are coupled together at their middle nodes by the resistor R4 and diode D4.

When the AC voltage V1 is applied and reaches a sum of the voltages on C1 and C4 (plus the forward voltage of D4), the rectified line voltage is applied across both capacitors C1 and C4, as they are both charged via D4 and R4, until C1 and C4 are each charged up to approximately half of the peak line voltage. When the rectified mains voltage passes the peak line voltage, and hence enters the "valley" phase, Vout begins to fall toward half of the peak line voltage. At this point, capacitors C1 and C4 begin to discharge into the load at Vout, via D2 and D2'. The resistor R4 prevents a large in-rush current, and electromagnetic interference (EMI).

Thus, the first and second capacitors are connected in series to be charged by an input voltage exceeding a first threshold and are connected in parallel (because diode D4 is non-conducting during this time) to discharge to the load when the input voltage is below a second threshold. Note that when the valley fill circuit is connected upstream of a switch mode power converter (as in the example below) the discharge is to the switch mode power converter, which then functions as the load for the valley fill circuit.

The two thresholds are essentially the same, and differ only in respect of the voltage drops across the resistor R4 and diode D4.

Figure 5 shows a switchable valley fill circuit. The diode D2' is replaced with a transistor M1. When the transistor is turned off, the body diode of the transistor M1 functions as the flyback diode D2' so the circuit performs the same valley fill function as for the circuit of Figure 4. Alternatively, it may be turned on (closed) to implement a disable function. For the disable function, the transistor M1 is operated as a short circuit so that the full input voltage is across C1 and hence across the load R2. D4 is non-conductive and C4 is disabled. The branch of C4 and D2 is not active.

A problem with the valley fill circuit is that it is not suitable for dual lamps in series because the valley voltage is too low.

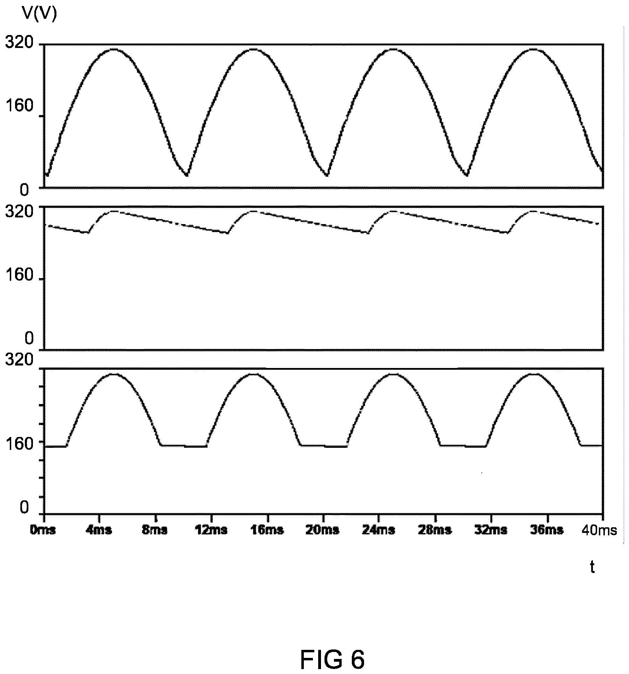

Figure 6 shows the operation of different circuits for a rectified 230Vac mains voltage. The top plot shows the output voltage for a high power factor circuit (with small input capacitor C1 in Figure 2), the middle plot shows the output voltage for a low power factor circuit (with large input capacitor C1 in Figure 2) and the bottom plot shows the output voltage for a valley fill circuit based on a low power factor circuit.

The bottom plot shows the improvement (compared to the top plot) obtained through the use of a valley fill circuit.

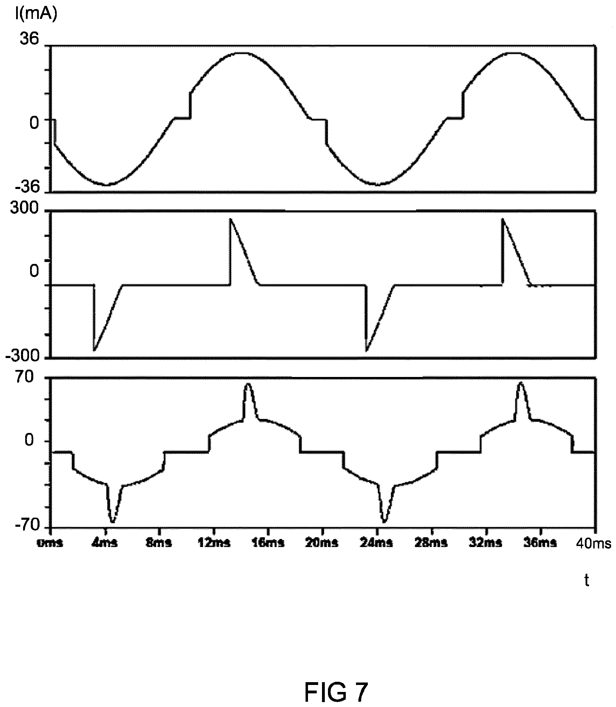

Figure 7 shows the input current for a high power factor circuit in the top plot, for a low power factor circuit in the middle plot and for a valley fill circuit (applied to a low power factor circuit) in the bottom plot.

It shows that the valley fill circuit enables a low power factor circuit to achieve a better (more sinusoidal) current waveform. The waveforms are equivalent for both 115V and 230V.

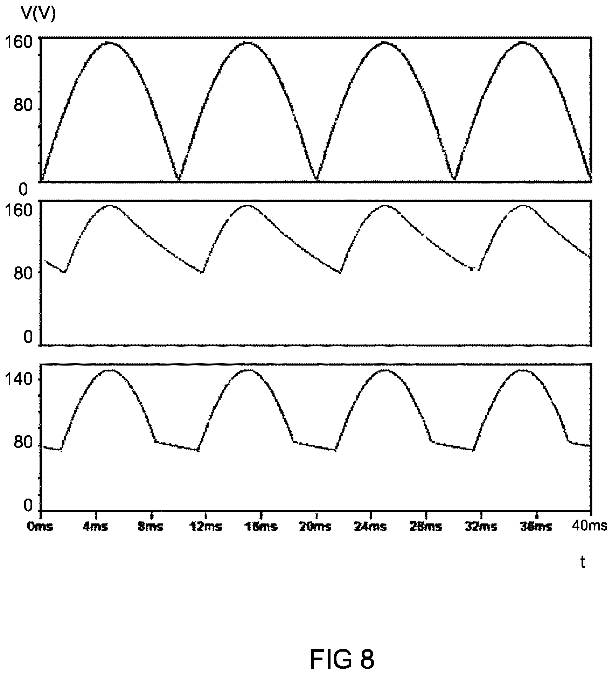

Figure 8 shows the operation of the different circuits for a rectified 115Vac mains voltage, corresponding to the situation when two loads are in series. The top plot shows the output voltage for a high power factor circuit (with small input capacitor C1 in Figure 2), the middle plot shows the output voltage for a low power factor circuit (with large input capacitor C1 in Figure 2) and the bottom plot shows the output voltage for a valley fill circuit based on a low power factor circuit.

For thus dual mode operation, a problem with the valley fill circuit is that the valley voltage (in particular the lowest voltage reached at the output) is lower than without the valley fill function. If the voltage drops below the turn on voltage of the LED string, this can cause flickering.

The invention is based on adopting a low power factor mode without valley fill function (the middle plot of Figure 8) for the dual mode, and a valley fill function for the single mode (the bottom plot of Figure 6).

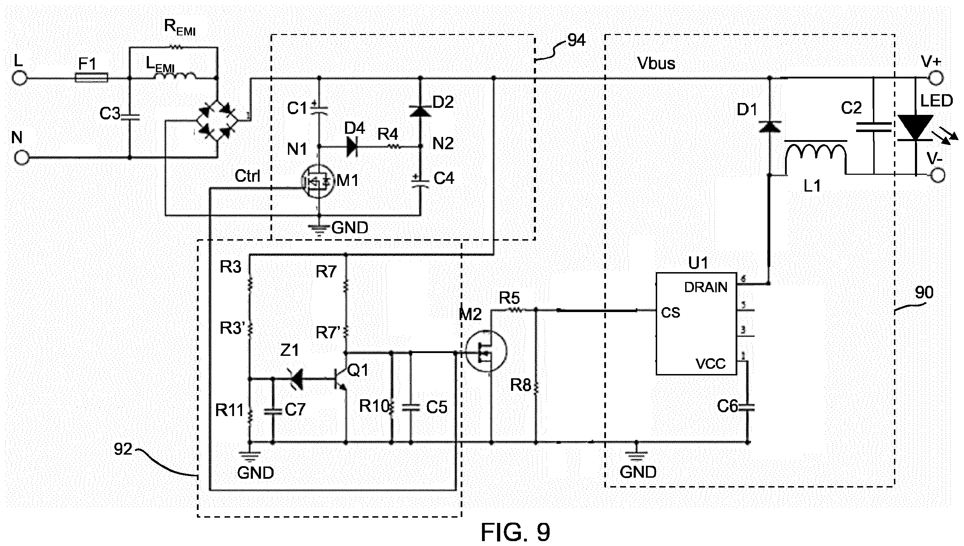

Figure 9 shows a first example of a driver for driving a lighting load. This is based on a driver having a controller U1 which is a low power factor buck converter integrated circuit.

The circuit comprises a switch mode power converter 90 which comprises an inductor L1, flyback diode D1, output capacitor C2. The switch mode power converter drives the lighting load LED. The switch mode power converter 90 includes the controller U1 which incorporates the main switch of the power converter (i.e. transistor M0 of Figures 1 or 2 is part of the controller U1).

The controller has a current sense input CS, a drain terminal DRAIN and a supply voltage terminal VCC. The main inductor current flows into the controller U1 via the drain terminal and flows out via the current sense input (it is called an input because the voltage on the pin is retrieved by the controller), and the main inductor current flows through the resistance between the pins CS and GND. The voltage across the resistance is retrieved by the controller.

An input voltage Vbus is received after rectification of the external power source L, N at a power input, and the driver provides energy to the lighting load LED at a power output V+, V-.

A detect arrangement 92 is adapted to detect if the driver is in a single mode and connected across the external power source alone or is in a dual mode and connected across the external power source in series with another driver.

A valley fill circuit 94 is provided between the power input (i.e. the received rectified mains Vbus) and the switch mode power converter 90. The valley fill circuit has a control input Ctrl for enabling or disabling the valley fill circuit 94 in dependence on whether the driver is in the single mode or the dual mode.

The detect arrangement 92 comprises a voltage detector for detecting the input voltage Vbus. The input voltage Vbus is provided to a resistor divider R3, R3', R11. The divided voltage is provided to the base of a transistor Q1 through a Zener diode D1. The transistor is powered by the input voltage Vbus through supply resistors R7, R7'.

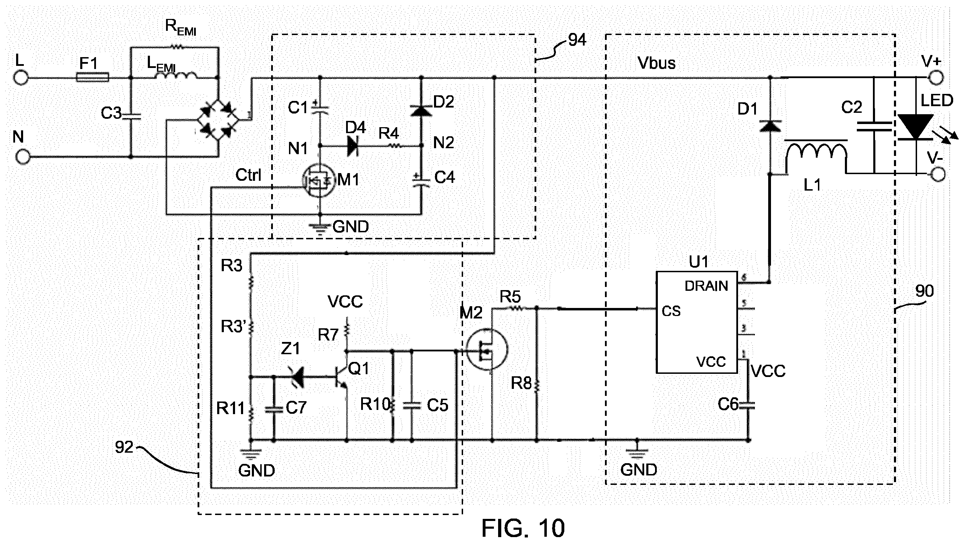

In an alternative shown in Figure 10, the transistor Q1 is powered by the voltage VCC generated by the controller U1 through resistor R7.

When the voltage Vbus is high enough, the threshold voltage of the Zener diode D1 is reached, and the transistor Q1 is made conductive. This pulls down the control line Ctrl.

The valley fill circuit is of the type shown in Figure 5. Thus, it comprises a first capacitor C1 and a second capacitor C4 to be connected in series to be charged by an input voltage exceeding a first threshold, and to be connected in parallel to discharge to the switched mode power supply when the input voltage is below a second threshold. A second switching arrangement M1 is for bypassing the second capacitor C4 in the dual mode and not bypassing the second capacitor C4 in the single mode.

In more detail, the first capacitor C1 is between the power input Vbus and a first node N1 and the second switching arrangement M1 is between the first node N1 and ground. The first diode D4 and the first resistor R4 are in series and in forward bias direction from the first node N1 to a second node N2. The second capacitor C4 is between the second node N2 and ground and the second diode is in the forward bias direction from the second node N2 to the power input Vbus.

When the control line Ctrl is pulled down, the first switching arrangement, i.e. first transistor M1, is turned off. This means the valley fill function of the valley fill circuit 94 is operative. The body diode of the transistor M1 functions as the flyback diode D2' so the circuit operates in the manner explained above.

In this way, the switchable valley circuit is used to improve the power factor only when the voltage Vbus is sufficiently high, in particular at a level corresponding to the connection of a single driver across the input. Thus, a low power factor circuit may be used, hence providing a low cost and simple driver architecture.

If the voltage Vbus is not sufficient to enable turn on of the transistor Q1 in Figure 9 or the voltage VCC is not sufficient to enable turn on of the transistor Q1 in Figure 10, the control line Ctrl is pulled high through the resistors R7, R7'. This turns on the transistor M1 thus bypassing the diode function and disabling the valley fill function as explained above.

The control line Ctrl is thus pulled low to enable the valley fill circuit 94 for the single mode and is pulled high to disable the valley fill circuit 94 for the dual mode. The detect arrangement 92 comprises a voltage sensing arrangement to sense the input voltage Vbus thereby to detect if the driver is in the single mode or in the dual mode. The valley fill circuit is used to obtain the desired power factor for the higher voltage single mode, whereas a low power factor circuit is able to achieve the desired current modulation when in the dual mode.

In the preferred implementation, the controller also has different operating modes depending on whether the single mode or dual mode is detected.

For the examples of Figures 9 and 10, the controller implements current sensing to provide peak current control. For this purpose, the current sense input CS receives a current sense voltage and turns off the main transistor of the switch mode power converter (in U1) when a maximum current is reached.

In the circuit of Figures 9 and 10, the current sense voltage is generated by a current sensing arrangement of a first resistor R5 in series with a first switching arrangement i.e. second transistor M2, and parallel resistor R8. When the transistor is off, the resistance of the current sensing arrangement seen by the input CS is the resistance of R8. When the transistor is on, the resistance of the current sensing arrangement seen by the input CS is the parallel combination of both of R5 and R8, hence a lower resistance.

When the resistance high, the controller believes a high current is flowing.

This high resistance is used for the single mode, since the controller can still adjust its duty cycle to regulate (reduce) the output current in order to obtain a proper voltage across the high resistance. Also, the transistor M2 is switched synchronously with transistor M1. They are both off for the single mode, so that the valley fill function is enabled, and a high resistance is used for current sensing. The result is that the controller operates with peak output current feedback control. The output current is thus regulated by feedback control.

When the valley fill circuit 94 is disabled for the dual mode, by a high signal on the control line Ctrl, the lower resistance is also set in the current sensing arrangement. When the resistance low, the controller believes a low current is flowing so it strives to increase the current by increasing its duty cycle. However, many controllers have a maximum duty cycle (Ton, max) and the controller would keep at this duty cycle all the time. As a result, the switch mode power converter operates in an open loop control mode and functions with a constant on time (Ton, max). The output current is controlled in open loop in dependence on the input voltage so that balancing between the two lamps is made possible. Since the valley fill circuit is turned off, the output voltage is high enough to meet the required load voltage (e.g. LED forward voltage).

In this way, the second transistor M2 increases a resistance of the current sensing arrangement to achieve the closed loop mode and decreases the resistance of the current sensing arrangement so as to saturate the controller U1 thereby to achieve the open loop mode.

The open loop control involves a saturated mode of operation in which a fixed maximum on time is used. The closed loop control involves a non-saturated mode of operation in which an on time is used which varies in dependence on a sensed current, thereby entering a current feedback control mode.

There are other possible methods for changing between open and closed loop control, for example with reference to the above mentioned WO 2016/008943. Those skilled in the art will know there are more alternatives to make a converter switchable in open loop mode and closed loop mode. Any solution that can change the converter between closed loop control and open loop control is applicable. The present application will therefore not give further details.

By way of example the capacitances of the first and the second capacitors C1, C4 are each in the range $1\mu F$ to $100\mu F$, the resistance of the first resistor R4 in the valley fill circuit is for example in the range $100\Omega$ to $1k\Omega$ and the smoothing capacitor C2 in parallel with the lighting load has a capacitance of more than $1\mu F$.

The maximum on time of the IC, used in the open loop mode, should not be too large, for example below $10\mu s$, in order to prevent that the operation frequency is too low when in the dual mode. When the main switch of the switch mode power converter is operated at the maximum on time, the switching frequency should be high enough to prevent acoustic noise being heard.

For the switchable valley fill circuit of Figure 5 (as used in the circuit of Figure 9), the turn on time of the main switching transistor of the switch mode power converter can be calculated by the below formula for a buck converter:

$$Ton = Lp*Ip/(Vbus-Vo)$$

Lp is the inductance of the power inductor L1, Ip is the peak current of the inductor, Vbus is the bus voltage, Vo is the LED string voltage.

In the single mode, the output current (Iout) can be calculated as:

$$Ip=Vcs(max)/Rcs$$

$$Iout=Ip/2$$

Vcs(max) is the current limiting threshold of the IC, 1.5V for typical value, Rcs is the effective resistance of the current sense arrangement.

In the dual lamp mode, the bus voltage is half of the rectified voltage of the mains voltage, shown in the middle plot of Figure 8. The voltage Vbus is low, and because transistors M1 and M2 are on, D2, D4 and C4 are disabled, so the valley fill circuit is disabled and the converter operates in a low PF mode.

In the valley fill mode, the valley voltage is lower and it may drop below the output voltage required to turn on the lighting load, which can cause flicker. Furthermore, a high output ripple current will be caused by high voltage ripple on the bus voltage. Thus, a low PF mode is better for dual lamp application than a valley fill mode.

In the dual mode, the output current (Iout) can be calculated as:

$$Ip=(Vdc-Vout) * Ton(max)/Lp$$

$$Iout=K*Ip$$

Where Vdc is bus voltage, Ton(max) is the maximum on time of the IC, K is about 0.3 to 0.4, and depends on the ripple bus voltage.

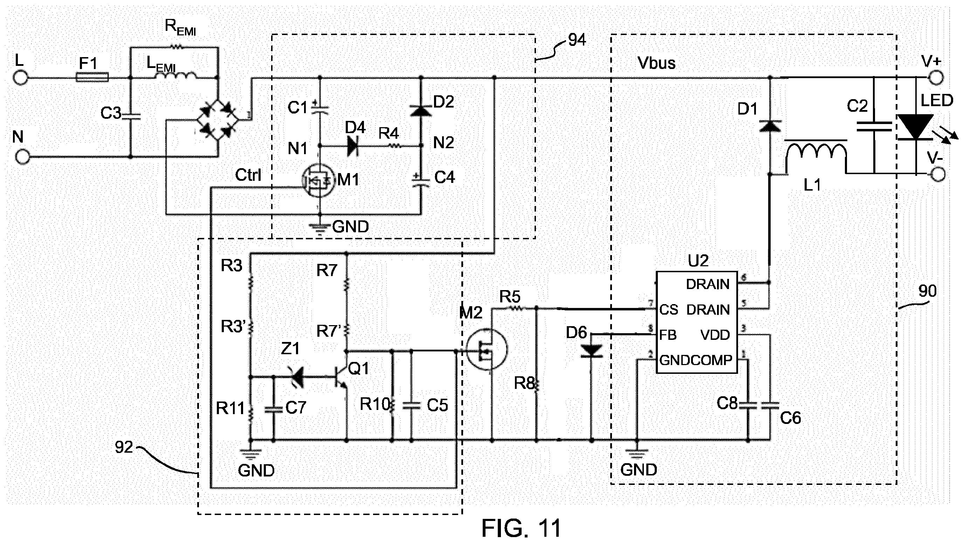

Figure 11 shows an implementation based on a high power factor IC U2.

The controller has a current sense input CS used in the same way as explained above, a feedback input FB, a drain terminal DRAIN and supply voltage terminal VDD and a comparison input COMP.

A diode D6 is used to detect an inductor demagnetization signal, and a loop compensation capacitor C8 is provided. The controller again has a maximum on time for example of 5μs.

Diode D6 is connected to the feedback pin FB, and C8 is connected to the COMP pin, and they are used for (voltage) feedback and for power factor correction for the IC.

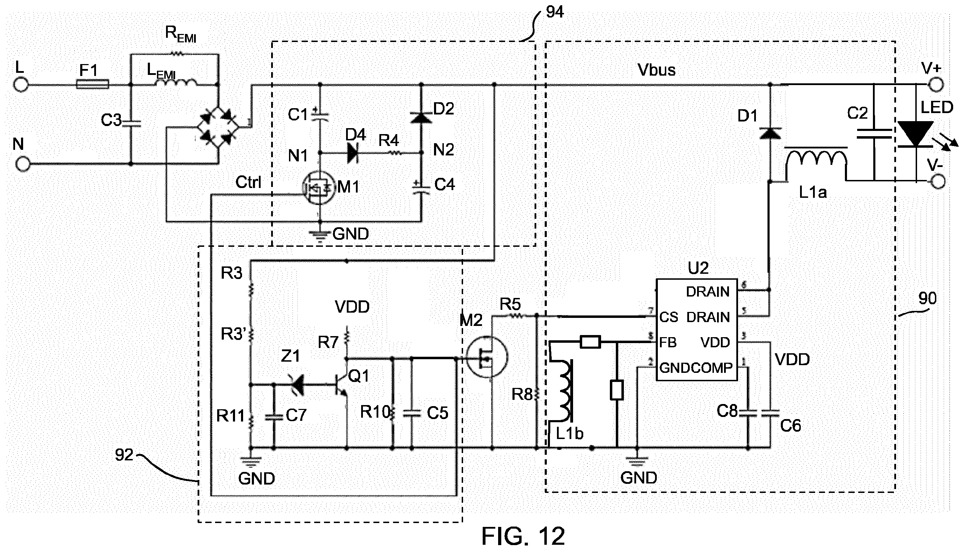

Figure 12 shows a modification to the circuit of Figure 11 with a different feedback detection arrangement and also with the transistor Q1 powered by the supply voltage VDD through resistor R7.

The detection uses a resistive divider sourced by a current from an auxiliary inductor coil L1b coupled to the power converter inductor, now named L1a.

The use of a high power factor circuit is of interest because an IC with a small value of Ton(max) (for example 5μs) is commercially available, which is good for the dual mode design. A low power factor IC with a value of Ton(max) less than 10μs would be used if/when available and would give lower cost.

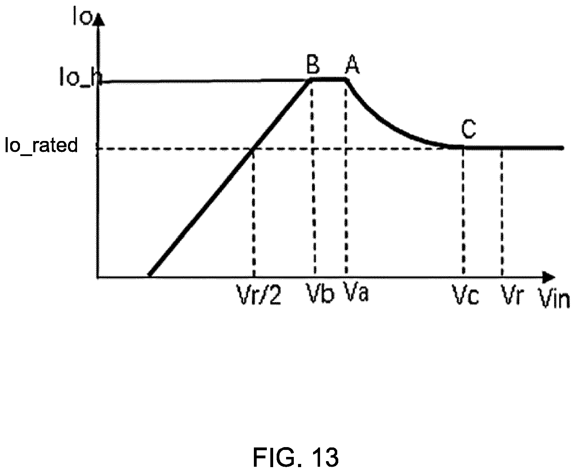

Figure 13 shows a possible current versus voltage characteristic.

The switch mode power converter is operable in the open loop mode when the input voltage is below a threshold level Vb, and delivers a first output current Io_rated at a first operating voltage Vr/2 below the threshold level Vb. The switch mode power converter operates in the closed loop switching mode when the input voltage is above the threshold level Vb (either immediately above Vb, or starting at a voltage somewhat higher than Vb). In a preferred implementation (as explained in EP2018213961.8) the closed loop mode delivers substantially same said first current output Io_rated at a second operating voltage Vr at or above the threshold level Vb.

The first operating voltage Vr/2 is half the second operating voltage Vr and is a nominal input voltage when the driver is connected in series with another driver to a voltage supply. The second operating voltage Vr is a nominal input voltage when the driver is connected to the voltage supply alone.

In Figure 13, there is a second threshold level Va larger than the first threshold level Vb and smaller than the second operating voltage Vr.

There is a change at the input voltage Vb to the closed loop feedback control. The current may be kept constant for an initial period of increase of the input voltage from Vb to Va. However, alternatively there is only one voltage Va=Vb at the transition between the two modes. There is then the power curve while the voltage increases from the second threshold Va to the third threshold level Vc which is still less than the second operating voltage Vr. While the input voltage is between the thresholds Vb and Vc, the current is controlled in feedback manner initially with a fixed current setting and then with a variable current setting. The output current again has dropped to the desired current Io_rated once the voltage reaches the third threshold Vc and it is then held constant.

Vb is for example set higher than 150V, Va is set below 190V and may be the same as Vb as mentioned above. In the dual lamp mode, Vin<Vb, M1 and M2 are on, and the circuit operates with maximum on time (open loop) control, so the output current is almost proportional to (Vdc-Vout). In the single lamp mode, Vin> Vc and the circuit operates at peak current control (closed loop) mode, so the output current is constant.

This is just one example of possible operating characteristic.

The example above makes use of voltage detection for identifying the mode. However, any suitable signal analysis may be used. A buck converter is given as an example, but other converter types may be used, such as boost and buck-boost.

**Claims**

1. A driver for driving a lighting load, comprising:

   a switch mode power converter (90) adapted to receive an input voltage (Vbus) from an external power source (V1) at a power input and to provide energy to the lighting load (LED) at a power output;
   a detect arrangement (92), adapted to detect if the driver is in a single mode and connected across the external power source alone, or is in a dual mode and connected across the external power source in series with another driver, **characterized in that** the driver comprises:

   a valley fill circuit (94) connected between the power input and the switch mode power converter (90); and
   a control input (Ctrl) adapted to enable the valley fill circuit (94) for the single mode and to disable the valley fill circuit (94) for the dual mode as detected by the detect arrangement (92).

2. A driver as claimed in claim 1, wherein the detect arrangement (92) comprises a voltage sensing arrangement adapted to sense the input voltage (Vbus) thereby to detect if the driver is in the single mode or in the dual mode.

3. A driver as claimed in claim 1 or 2, wherein when the valley fill circuit (94) is enabled for the single mode, the switch mode power converter is adapted to operate in a closed loop control mode with peak output current feedback control.

4. A driver as claimed in claim 3, wherein when the valley fill circuit (94) is disabled for the dual mode, the switch mode power converter is adapted to operate in an open loop control mode.

5. A driver as claimed in claim 4, comprising a controller (U1) and a current sensing arrangement (R5, R8) adapted to sense the current flowing through a main switch of the switch mode power converter and feed back to the controller (U1), wherein the detect arrangement comprises a first switching arrangement (M2) adapted to configure the current sensing arrangement thereby to enable the controller (U1) to configure the switched mode power converter in the closed loop mode or in the open loop mode.

6. A driver as claimed in claim 5, wherein the first switching arrangement (M2) is adapted to increase a resistance of the current sensing arrangement to achieve the closed loop mode and decrease the resistance of the current sensing arrangement so as to saturate the controller (U1) thereby to achieve the open loop mode.

7. A driver as claimed in any one of claims 5 to 6, wherein the valley fill circuit (94) comprises:
   a first capacitor (C1) and a second capacitor (C4), wherein the first and second capacitors are:

   adapted to connect in series to be charged by an input voltage exceeding a first threshold; and
   adapted to connect in parallel to discharge to the switched mode power supply when the input voltage is below a second threshold.

8. A driver as claimed in claim 7, wherein the valley fill circuit further comprises a second switching arrangement (M1) adapted to bypass the second capacitor (C4) in the dual mode and not bypass the second capacitor (C4) in the single mode.

9. A driver as claimed in claim 8, wherein the capacitance of the first and the second capacitors (C1, C4) are each in the range $1\mu F$ to $100\mu F$.

10. A driver as claimed in claim 8 or 9, wherein the second switching arrangement (M1) comprises a transistor, and the control terminal of the second switching arrangement (M1) and the control terminal of the first switching arrangement (M2) are connected together.

11. A driver as claimed in any one of claims 8 to 10, wherein the valley fill circuit comprises:

   the first capacitor (C1) between the power input (Vbus) and a first node (N1), wherein the switching arrangement (M1) is between the first node (N1) and a reference (GND);
   a first diode (D4) and a first resistor (R4) in series and in forward bias direction from the first node (N1) to a second node (N2);
   the second capacitor (C4) between the second node (N2) and the reference (GND); and
   a second diode (D2) in the forward bias direction from the second node (N2) to the power input (Vbus).

12. A driver as claimed in any one of claims 1 to 11, comprising a smoothing capacitor (C2) for connection in parallel with the lighting load (LED), wherein the smoothing capacitor has a capacitance of more than 1µF.

13. A driver as claimed in any one of claims 1 to 12, wherein the switch mode power converter comprises a buck converter.

14. A lighting circuit, comprising:

a driver as claimed in any one of claims 1 to 13; and
a lighting load (LED) connected to the power output of the driver.

15. A driving method for driving a lighting load using a driver, the method comprising:

receiving by a switch mode power converter (90) of the driver an input voltage (Vbus) from an external power source (V1) at a power input and providing energy to the lighing load at a power output;
detecting by a detect arrangement (92) of the driver if the driver is in a single mode and connected across the external power source alone or is in a dual mode and connected across the external power source in series with another driver; and **characterized in**
enabling a valley fill circuit (94) connected between the power input and the switch mode power converter for the single mode and disabling the valley fill circuit (94) for the dual mode, as detected by the detect arrangement.

**Patentansprüche**

1. Treiber zum Antreiben einer Beleuchtungslast umfassend:

einen Zwischenkreis-Stromumrichter (90), der angepasst ist, um eine Eingangsspannung (Vbus) von einer externen Stromquelle (V1) an einem Stromeingang zu empfangen und an einem Stromausgang Energie an die Beleuchtungslast (LED) bereitzustellen;
eine Erfassungsanordnung (92), die angepasst ist, um zu erfassen, ob der Treiber in einem Einzelmodus ist und über die externe Stromquelle allein verbunden ist oder in einem Doppelmodus ist und über die externe Stromquelle mit einem anderen Treiber in Reihe geschaltet ist, **dadurch gekennzeichnet, dass** der Treiber umfasst:

eine Valley-Fill-Schaltung (94), die zwischen dem Stromeingang und dem Zwischenkreis-Stromumrichter (90) verbunden ist; und
einen Steuereingang (Ctrl), der angepasst ist, um die Valley-Fill-Schaltung (94) für den Einzelmodus zu aktivieren und die Valley-Fill-Schaltung (94) für den Doppelmodus zu deaktivieren, wie durch die Erfassungsanordnung (92) erfasst.

2. Treiber nach Anspruch 1, wobei die Erfassungsanordnung (92) eine Spannungsabgreifanordnung umfasst, die angepasst ist, um die Eingangsspannung (Vbus) abzugreifen, um dadurch zu erfassen, ob der Treiber in dem Einzelmodus oder in dem Doppelmodus ist.

3. Treiber nach Anspruch 1 oder 2, wobei, wenn die Valley-Fill-Schaltung (94) für den Einzelmodus aktiviert ist, der Zwischenkreis-Stromumrichter angepasst ist, um in einem Regelungsmodus mit einer Spitzenausgangsstromrückkopplungssteuerung zu arbeiten.

4. Treiber nach Anspruch 3, wobei, wenn die Valley-Fill-Schaltung (94) für den Doppelmodus deaktiviert ist, der Zwischenkreis-Stromumrichter angepasst, um in einem Steuerungsmodus zu arbeiten.

5. Treiber nach Anspruch 4, umfassend eine Steuereinrichtung (U1) und eine Stromabgreifanordnung (R5, R8), die angepasst ist, um den Strom abzugreifen, der durch einen Hauptschalter des Zwischenkreis-Stromumrichters fließt und an die Steuereinrichtung (U1) rückzuführen, wobei die Erfassungsanordnung eine erste Schaltanordnung (M2) umfasst, die angepasst ist, um die Stromabgreifanordnung zu konfigurieren, wobei dadurch die Steuereinrichtung (U1) aktiviert wird, um den Zwischenkreis-Stromumrichter in dem Regelungsmodus oder in dem Steuerungsmodus zu konfigurieren.

6. Treiber nach Anspruch 5, wobei die erste Schaltanordnung (M2) angepasst ist, um einen Widerstand der Stromabgreifanordnung zu erhöhen, um den Regelungsmodus zu erreichen, und den Widerstand der Stromabgreifanordnung zu verringern, um die Steuereinrichtung (U1) zu sättigen, um dadurch den Steuerungsmodus zu erreichen.

7. Treiber nach einem der Ansprüche 5 bis 6, wobei die Valley-Fill-Schaltung (94) umfasst:
einen ersten Kondensator (C1) und einen zweiten Kondensator (C4), wobei der erste und der zweite Kondensator:

angepasst sind, um in Reihe zu schalten, um durch eine Eingangsspannung geladen zu werden, die einen ersten Schwellenwert überschreitet; und

angepasst sind, um parallel zu schalten, um zu dem Schaltnetzteil zu entladen, wenn die Eingangsspannung unter einem zweiten Schwellenwert ist.

8. Treiber nach Anspruch 7, wobei die Valley-Fill-Schaltung ferner eine zweite Schaltanordnung (M1) umfasst, die angepasst ist, um den zweiten Kondensator (C4) in dem Doppelmodus zu überbrücken und den zweiten Kondensator (C4) in dem Einzelmodus nicht zu überbrücken.

9. Treiber nach Anspruch 8, wobei die Kapazität des ersten und des zweiten Kondensators (C1, C4) jeweils im Bereich 1 μF bis 100 μF ist.

10. Treiber nach Anspruch 8 oder 9, wobei die zweite Schaltanordnung (M1) einen Transistor umfasst, und die Leitstation der zweiten Schaltanordnung (M1) und die Leitstation der ersten Schaltanordnung (M2) miteinander verbunden sind.

11. Treiber nach einem der Ansprüche 8 bis 10, wobei die Valley-Fill-Schaltung umfasst:

den ersten Kondensator (C1) zwischen dem Stromeingang (Vbus) und einem ersten Knoten (N1), wobei die Schaltanordnung (M1) zwischen dem ersten Knoten (N1) und einer Referenz (GND) ist;
eine erste Diode (D4) und einen ersten Widerstand (R4) in Reihe und in Durchlassrichtung vorgespannt von dem ersten Knoten (N1) zu einem zweiten Knoten (N2);
den zweiten Kondensator (C4) zwischen dem zweiten Knoten (N2) und der Referenz (GND); und
eine zweite Diode (D2) in der Durchlassrichtung vorgespannt von dem zweiten Knoten (N2) zu dem Stromeingang (Vbus).

12. Treiber nach einem der Ansprüche 1 bis 11, umfassend einen Glättungskondensator (C2) für Parallelschaltung mit der Beleuchtungslast (LED), wobei der Glättungskondensator eine Kapazität von mehr als 1 μF aufweist.

13. Treiber nach einem der Ansprüche 1 bis 12, wobei der Zwischenkreis-Stromumrichter einen Abwärtswandler umfasst.

14. Beleuchtungsschaltung, umfassend:

einen Treiber nach einem der Ansprüche 1 bis 13; und

eine Beleuchtungslast (LED), die mit der Stromausgang des Treibers verbunden ist.

15. Antriebsverfahren zum Antreiben einer Beleuchtungslast unter Verwendung eines Treibers, das Verfahren umfassend:

Empfangen durch einem Zwischenkreis-Stromumrichter (90) des Treibers eine Eingangsspannung (Vbus) von einer externen Stromquelle (V1) an einem Stromeingang und Bereitstellen von Energie an die Beleuchtungslast an einem Stromausgang;
Erfassen durch eine Erfassungsanordnung (92) des Treibers, ob der Treiber in einem Einzelmodus ist und über die externe Stromquelle allein verbunden ist oder in einem Doppelmodus ist und über die externe Stromquelle mit einem anderen Treiber in Reihe geschaltet ist;und **gekennzeichnet durch**
Aktivieren einer Valley-Fill-Schaltung (94), die zwischen dem Stromeingang und dem Zwischenkreis-Stromumrichter für den Einzelmodus verbunden ist, und Deaktivieren der Valley-Fill-Schaltung (94) für den Doppelmodus, wie durch die Erfassungsanordnung erfasst.

**Revendications**

1. Pilote permettant de piloter une charge d'éclairage, comprenant :

un convertisseur de puissance à mode de commutation (90) adapté pour recevoir une tension d'entrée (Vbus) provenant d'une source d'alimentation externe (V1) à une entrée de puissance et pour fournir de l'énergie à la charge d'éclairage (DEL) à une sortie de puissance ;
un agencement de détection (92), adapté pour détecter si le pilote se trouve dans un mode unique et connecté à la source d'alimentation externe seule, ou se trouve dans un mode double et connecté à la source d'alimentation externe en série avec un autre pilote,
**caractérisé en ce que** le pilote comprend :

un circuit de lissage (94) connecté entre l'entrée de puissance et le convertisseur de puissance à mode de commutation (90) ; et
une entrée de commande (Ctrl) adaptée pour activer le circuit de lissage (94) pour le mode unique et pour désactiver le circuit de lissage (94) pour le mode double tel que détecté par l'agencement de détection (92).

2. Pilote selon la revendication 1, dans lequel l'agencement de détection (92) comprend un agencement de détection de tension adapté pour détecter la tension d'entrée (Vbus) pour ainsi détecter si le pilote se trouve dans le mode unique ou dans le mode double.

3. Pilote selon la revendication 1 ou 2, dans lequel lorsque le circuit de lissage (94) est activé pour le mode unique, le convertisseur de puissance à mode de commutation est adapté pour fonctionner dans un mode de commande en boucle fermée avec une commande de rétroaction de courant de sortie de crête.

4. Pilote selon la revendication 3, dans lequel lorsque le circuit de lissage (94) est désactivé pour le mode double, le convertisseur de puissance à mode de commutation est adapté pour fonctionner dans un mode de commande en boucle ouverte.

5. Pilote selon la revendication 4, comprenant un dispositif de commande (U1) et un agencement de détection de courant (R5, R8) adapté pour détecter le courant circulant à travers un commutateur principal du convertisseur de puissance à mode de commutation et renvoyer au dispositif de commande (U1), dans lequel l'agencement de détection comprend un premier agencement de commutation (M2) adapté pour configurer l'agencement de détection de courant pour ainsi permettre au dispositif de commande (U1) de configurer le convertisseur de puissance à mode commuté dans le mode en boucle fermée ou dans le mode en boucle ouverte.

6. Pilote selon la revendication 5, dans lequel le premier agencement de commutation (M2) est adapté pour augmenter une résistance de l'agencement de détection de courant pour obtenir le mode en boucle fermée et diminuer la résistance de l'agencement de détection de courant de manière à saturer le dispositif de commande (U1) pour ainsi obtenir le mode en boucle ouverte.

7. Pilote selon l'une quelconque des revendications 5 à 6, dans lequel le circuit de lissage (94) comprend : un premier condensateur (C1) et un second condensateur (C4), dans lequel les premier et second condensateurs sont :

   adaptés pour se connecter en série pour être chargé par une tension d'entrée dépassant un premier seuil ; et
   adaptés pour se connecter en parallèle pour décharger l'alimentation en mode commuté lorsque la tension d'entrée est inférieure à un second seuil.

8. Pilote selon la revendication 7, dans lequel le circuit de lissage comprend en outre un second agencement de commutation (M1) adapté pour contourner le second condensateur (C4) dans le mode double et ne pas contourner le second condensateur (C4) dans le mode unique.

9. Pilote selon la revendication 8, dans lequel les capacités des premier et second condensateurs (C1, C4) sont chacune comprises dans la plage de 1 µF à 100 µF.

10. Pilote selon la revendication 8 ou 9, dans lequel le second agencement de commutation (M1) comprend un transistor, et la borne de commande du second agencement de commutation (M1) et la borne de commande du premier agencement de commutation (M2) sont connectées ensemble.

11. Pilote selon l'une quelconque des revendications 8 à 10, dans lequel le circuit de lissage comprend :

   le premier condensateur (C1) entre l'entrée de puissance (Vbus) et un premier noeud (N1), dans lequel l'agencement de commutation (M1) se trouve entre le premier noeud (N1) et une référence (GND) ;
   une première diode (D4) et une première résistance (R4) en série et dans un sens de polarisation directe du premier noeud (N1) vers un second noeud (N2) ;
   le second condensateur (C4) entre le second noeud (N2) et la référence (GND) ; et
   une seconde diode (D2) dans le sens de polarisation directe du second noeud (N2) vers l'entrée de puissance (Vbus).

12. Pilote selon l'une quelconque des revendications 1 à 11, comprenant un condensateur de filtrage (C2) pour une connexion en parallèle avec la charge d'éclairage (DEL), dans lequel le condensateur de filtrage a une capacité supérieure à 1 µF.

13. Pilote selon l'une quelconque des revendications 1 à 12, dans lequel le convertisseur de puissance à mode de commutation comprend un convertisseur abaisseur de tension.

14. Circuit d'éclairage comprenant :

   un pilote selon l'une quelconque des revendications 1 à 13 ; et
   une charge d'éclairage (DEL) connectée à la sortie de puissance du pilote.

15. Procédé de pilotage permettant de piloter une charge d'éclairage à l'aide d'un pilote, le procédé comprenant :

   la réception par un convertisseur de puissance à mode de commutation (90) du pilote d'une tension d'entrée (Vbus) à partir d'une source d'alimentation externe (V1) à une entrée de puissance et la fourniture d'énergie à la charge d'éclairage à une sortie de puissance ;

la détection par un agencement de détection (92) du pilote si le pilote se trouve dans le mode unique et connecté à la source d'alimentation seule ou se trouve dans le mode double et connecté à la source d'alimentation externe en série avec un autre pilote ; et **caractérisé par**

l'activation d'un circuit de lissage (94) connecté entre l'entrée de puissance et le convertisseur de puissance à mode de commutation pour le mode unique et la désactivation du circuit de lissage (94) pour le mode double, tel que détecté par l'agencement de détection.

FIG. 1

FIG. 2

FIG. 3

**FIG 4**

**FIG 5**

FIG 6

FIG 7

V(V)

FIG 8

FIG. 9

FIG. 10

FIG. 11

FIG. 12

FIG. 13

**EP 3 915 340 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7911149 B2
- WO 2013039366 A
- WO 2016008943 A
- EP 2018213961